# FASCICULE DE BREVET EUROPEEN

(11) **EP 4 154 776 B1**
(45) Date de publication et mention de la délivrance du brevet: **10.04.2024**
(21) Numéro de dépôt: 22197321.7
(22) Date de dépôt: 23.09.2022
(51) Int. Cl.: A47J 43/06, A47J 43/07, A47J 43/08, A47J 44/02, A47J 43/044

(54) **BASE D' APPAREIL ÉLECTROMÉNAGER DE PRÉPARATION CULINAIRE COMPRENANT UN VOLET DE SÉCURITÉ PIVOTANT**
KÜCHENMASCHINEN-UNTERGESTELL MIT EINEM SCHWENKBAREN SICHERHEITSVERSCHLUSS
BASE OF HOUSEHOLD APPLIANCE FOR CULINARY PREPARATION INCLUDING A PIVOTING SAFETY SHUTTER

(30) Priorité: 23.09.2021 FR 2110041
(43) Date de publication de la demande: 29.03.2023
(73) Titulaire: SEB S.A., 69130 Ecully (FR)
(72) Inventeur: RETOUR, Stéphane, 69134 Ecully Cedex (FR); FÉRON, Stéphanie, 69134 Ecully Cedex (FR)
(74) Mandataire: Regimbeau

(56) Documents cités:
- CN-A- 105 816 071
- CN-U- 208 371 651
- DE-A1-102005 040 509

## Description

### DOMAINE DE L'INVENTION

La présente invention concerne une base d'appareil électroménager de préparation culinaire, et un appareil électroménager de préparation culinaire comprenant une telle base et accessoire.

### ETAT DE LA TECHNIQUE

Les appareils électroménagers de préparation culinaire, tels que les robots pâtissiers, peuvent comprendre une base associée à un ou plusieurs accessoires de travail à outil rotatif. La base est un boîtier motorisé qui présente une première sortie d'entraînement et une deuxième sortie d'entraînement, débouchant d'une face supérieure de la base et configurées chacune pour recevoir un accessoire de travail rotatif. Les deux sorties d'entraînement sont agencées pour être entraînées simultanément en rotation par un moteur.

En l'absence d'accessoire mis en place sur au moins l'une des sorties d'entraînement, un cache peut être disposé sur la base de sorte à recouvrir la face supérieure de la base pour empêcher l'accès de l'utilisateur à toutes les sorties d'entraînement.

Ce cache doit être enlevé pour pouvoir mettre en place un accessoire sur une sortie d'entraînement. Or, du fait de l'entraînement simultané des deux sorties d'entraînement par le moteur, lorsqu'un accessoire est mis en place sur l'une des sorties d'entraînement, l'autre sortie d'entraînement non utilisée tourne alors à l'air libre. Cela peut présenter un danger pour l'utilisateur et/ou diminuer son sentiment de sécurité, notamment lorsque la vitesse de rotation de la sortie d'entraînement qui tourne à l'air libre est élevée.

Le document EP 0 832 594 A2 décrit un robot culinaire comprenant une pièce de blocage adaptée pour translater entre deux positions. Dans chacune des deux positions, la pièce de blocage autorise respectivement la mise en place d'un accessoire sur l'une des deux sorties d'entraînement, et empêche la mise en place d'un accessoire sur l'autre sortie d'entraînement, qui forme donc une sortie d'entraînement non utilisée. Toutefois, la pièce de blocage n'empêche pas l'accès à l'utilisateur à la sortie d'entraînement non utilisée. Certains appareils permettent de recouvrir la sortie d'entraînement non utilisée à l'aide de deux capots indépendants, l'utilisateur pouvant mettre en place l'un des deux capots sur la base pour recouvrir la sortie d'entraînement non utilisée. Néanmoins, aucun dispositif n'est présent pour vérifier le recouvrement de la sortie d'entraînement non utilisée. Par conséquent, si l'utilisateur ne place pas le capot sur la sortie d'entraînement non utilisée, cette dernière tournera à l'air libre sans protection.

Le document CN 208371651 U décrit une base de robot culinaire comprenant un volet pivotant qui peut être rabattu contre la face supérieure de la base de sorte à recouvrir alternativement l'une des deux sorties d'entraînement, l'autre sortie d'entraînement étant découverte de sorte à permettre la mise en place et l'entraînement d'un accessoire. Le volet présente des dimensions et des formes adaptées pour recouvrir globalement la moitié de la base qui comprend la sortie d'entraînement non utilisée, le volet prolongeant la face supérieure de la base.

Néanmoins, l'utilisateur peut ne pas rabattre entièrement le volet pivotant sur la base de l'appareil, et ainsi ne pas recouvrir de façon satisfaisante la sortie d'entraînement non utilisée, le volet étant alors dans une position intermédiaire relevée entre les deux sorties d'entraînement, au lieu de reposer contre la base. Les problèmes de sécurité et de sentiment de danger de l'utilisateur associés au fait que la sortie d'entraînement non utilisée tourne à l'air libre ne sont alors pas entièrement résolus.

Le document CN 208371651 U préconise de mettre en place une sécurité électronique pour s'assurer que le volet recouvre bien la sortie d'entraînement non utilisée. La sécurité électronique comprend deux interrupteurs, disposés chacun à proximité de l'une des sorties d'entraînement, de sorte que le volet appuie respectivement sur l'un des deux interrupteurs lorsqu'il est correctement rabattu contre la base, libérant ainsi la rotation des sorties d'entraînement. Ainsi, la rotation est bloquée lorsque le volet n'est pas entièrement rabattu contre la base. En revanche, ces deux interrupteurs électroniques de sécurité complexifient l'agencement au sein du robot culinaire, en augmentent le coût, et peuvent présenter des problèmes de fiabilité.

### EXPOSE DE L'INVENTION

Un but de l'invention est de proposer une base pour un appareil électroménager de préparation culinaire qui soit sécurisée pour l'utilisateur et de conception simple.

Selon un premier aspect, l'invention concerne une base d'appareil électroménager de préparation culinaire selon la revendication 1.

Le volet peut notamment comprendre une surface de réception prévue pour coopérer mécaniquement avec le deuxième accessoire de sorte à assurer une mise en place et un maintien du volet dans la première configuration destinée. Le deuxième accessoire vient actionner mécaniquement le mouvement du volet.

Certaines caractéristiques préférées mais non limitatives de la base décrite ci-dessus sont les suivantes, prises individuellement ou en combinaison :
- la charnière du volet est montée sur la base sensiblement à égale distance entre la première sortie d'entraînement et la deuxième sortie d'entraînement ;
- le volet comprend un bras reliant la charnière à la plaque d'obturation ;
- le bras du volet est configuré pour coopérer avec une butée d'appui prévue sur le deuxième accessoire de sorte à assurer une mise en place et un maintien du volet dans la première configuration lorsque le deuxième accessoire est mis en place sur la deuxième sortie d'entraînement ; par exemple, une face supérieure du bras du volet peut présenter des dimensions adaptées pour former une surface de réception prévu pour recevoir la butée d'appui du deuxième accessoire lorsque le deuxième accessoire est mis en place sur la deuxième sortie d'entraînement ;
- le bras du volet forme une plaque sensiblement plane s'étendant dans le prolongement de la plaque d'obturation ;
- le volet comprend en outre une face de contact reliée au bras du volet, la charnière formant une jonction entre la face de contact et le bras, dans lequel lorsque le volet est dans la première configuration ou dans la deuxième configuration, la face de contact s'étend sensiblement perpendiculairement au bras et à la plaque d'obturation, et dans lequel la face de contact du volet est prévue pour être logée dans un renfoncement du premier accessoire de sorte à limiter un pivotement du volet lorsque le volet est dans la deuxième configuration et que le premier accessoire est mis sur place sur la première sortie d'entraînement, et/ou pour être logée dans un renfoncement du deuxième accessoire de sorte à limiter un pivotement du volet lorsque le volet est dans la première configuration et que le deuxième accessoire est mis sur place sur la deuxième sortie d'entraînement ;
- le volet comprend un bras supplémentaire et une charnière supplémentaire prévue pour être montée sur la base de sorte à permettre un pivotement du volet par rapport à la base, dans laquelle le bras supplémentaire relie la charnière supplémentaire à la plaque d'obturation ;
- le volet est configuré pour coopérer en outre avec une butée d'appui supplémentaire prévue sur le premier accessoire de sorte à assurer une mise en place et un maintien du volet dans la deuxième configuration lorsque le premier accessoire est mis en place sur la première sortie d'entraînement ; par exemple, une face inférieure du bras du volet peut présenter des dimensions adaptées pour former une surface de réception prévu pour recevoir la butée d'appui du premier accessoire lorsque le premier accessoire est mis en place sur la deuxième sortie d'entraînement ;
- la première sortie d'entraînement comprend un premier arbre de sortie et un premier entraîneur solidaire en rotation du premier arbre de sortie, la deuxième sortie d'entraînement comprend un deuxième arbre de sortie et un deuxième entraîneur solidaire en rotation du deuxième arbre de sortie, la plaque d'obturation du volet est adaptée pour recouvrir entièrement le premier arbre de sortie et pour recouvrir entièrement le premier entraîneur lorsque le volet est dans la première configuration, la plaque d'obturation du volet reposant sur le premier entraîneur, et la plaque d'obturation du volet est adaptée pour recouvrir entièrement le deuxième arbre de sortie et pour recouvrir entièrement le deuxième entraîneur lorsque le volet est dans la deuxième configuration, la plaque d'obturation du volet reposant sur le deuxième entraîneur ;
- la base comprend en outre un réducteur adapté pour réduire une vitesse de rotation de la deuxième sortie d'entraînement par rapport à une vitesse de rotation de la première sortie d'entraînement.

Selon un deuxième aspect, l'invention concerne un appareil électroménager de préparation culinaire tel que défini dans la revendication 11.

Certaines caractéristiques préférées mais non limitatives de l'accessoire décrit ci-dessus sont les suivantes, prises individuellement ou en combinaison :
- la butée d'appui est formée par un ergot du deuxième accessoire ;
- l'accessoire comprend en outre une paroi de corps définissant avec la paroi de fond un réservoir adapté pour recevoir un aliment, dans lequel la paroi de corps s'étend sensiblement autour d'un axe du deuxième accessoire, et dans lequel l'ergot s'étend sensiblement parallèlement à l'axe du deuxième accessoire depuis une jonction entre la paroi de fond et la paroi de corps du deuxième accessoire ;
- l'accessoire est un bol mini-hachoir ;
- l'accessoire comprend en outre une paroi de corps dans laquelle est formé un renfoncement adapté pour loger une face de contact du volet lorsque le deuxième accessoire est mis en place sur la deuxième sortie d'entraînement.

La base peut comprendre en outre un premier accessoire adapté pour être mis en place de manière amovible sur la première sortie d'entraînement de sorte à être entraîné en rotation par la première sortie d'entraînement.

L'appareil électroménager de préparation culinaire peut être un robot pâtissier.

### DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :
Les figures 1 et 2 sont des vues en perspective d'une base pour un appareil électroménager de préparation culinaire selon un mode de réalisation de l'invention, le volet étant respectivement dans la première configuration et dans la deuxième configuration.
Les figures 3A et 3B sont des vues en perspective d'une base pour un appareil électroménager de préparation culinaire selon un mode de réalisation de l'invention, le volet étant respectivement dans la deuxième configuration et dans la première configuration.
La figure 4 est un une vue en perspective d'une base pour un appareil électroménager de préparation culinaire selon un mode de réalisation de l'invention, le volet étant dans la première configuration et un deuxième accessoire étant mis en place sur la deuxième sortie d'entraînement.
La figure 5 est un une vue en perspective agrandie d'une zone de coopération entre le volet d'une base pour un appareil électroménager de préparation culinaire selon un mode de réalisation de l'invention et un deuxième accessoire.
La figure 6A est un une vue en perspective d'une base pour un appareil électroménager de préparation culinaire selon un mode de réalisation de l'invention, le volet étant dans la deuxième configuration et un premier accessoire étant mis en place sur la première sortie d'entraînement.
La figure 6B est un une vue en perspective agrandie d'une zone de coopération entre le volet d'une base pour un appareil électroménager de préparation culinaire selon un mode de réalisation de l'invention et un premier accessoire.
La figure 7A est une vue en perspective d'une base pour un appareil électroménager de préparation culinaire selon un mode de réalisation de l'invention, un premier accessoire étant mis en place sur la première sortie d'entraînement.
La figure 7B est une vue en perspective d'une base pour un appareil électroménager de préparation culinaire selon un mode de réalisation de l'invention, un deuxième accessoire étant mis en place sur la deuxième sortie d'entraînement.

### DESCRIPTION DETAILLEE DE L'INVENTION

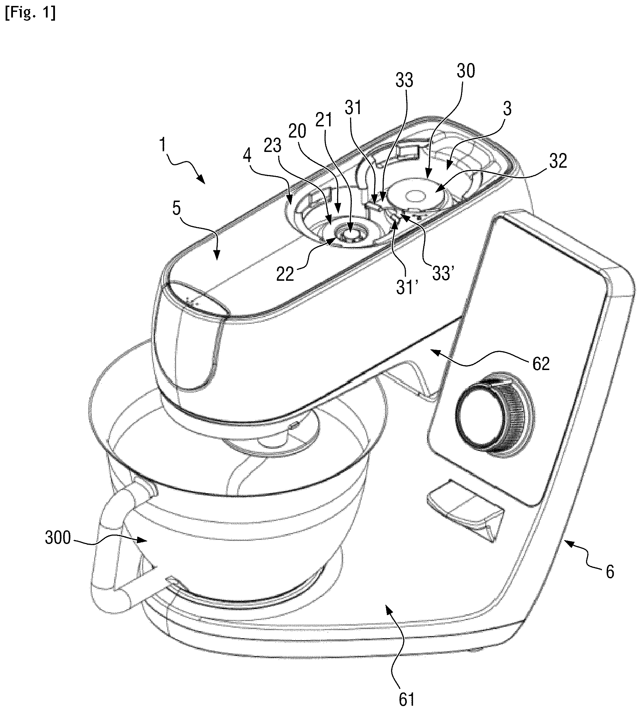

Une base 1, ainsi qu'illustrée à titre d'exemple non limitatif en figures 1 à 7B, comprend :
- une première sortie d'entraînement 10 adaptée pour mettre en place de manière amovible et entraîner en rotation un premier accessoire 100 ;
- une deuxième sortie d'entraînement 20 adaptée pour mettre en place de manière amovible et entraîner en rotation un deuxième accessoire 200 ;
- un moteur électrique adapté pour entraîner simultanément en rotation la première sortie d'entraînement 10 et la deuxième sortie d'entraînement 20 ; et
- un volet 30 de sécurité pivotant, comprenant une charnière 31 prévue pour être montée sur la base 1 de sorte à permettre un pivotement du volet 30 par rapport à la base 1, et une plaque d'obturation 32 prévue pour obturer la première sortie d'entraînement 10 et la deuxième sortie d'entraînement 20, dans laquelle ledit volet 30 est monté pivotant sur la base 1 entre une première configuration dans laquelle la plaque d'obturation 32 du volet 30 recouvre la première sortie d'entraînement 10, la deuxième sortie d'entraînement 20 étant découverte, et une deuxième configuration dans laquelle la plaque d'obturation 32 du volet 30 recouvre la deuxième sortie d'entraînement 20, la première sortie d'entraînement 10 étant découverte.

Le volet 30 est configuré pour coopérer avec le deuxième accessoire 200 de sorte à assurer une mise en place et un maintien du volet 30 dans la première configuration lorsque le deuxième accessoire 200 est mis en place sur la deuxième sortie d'entraînement 20.

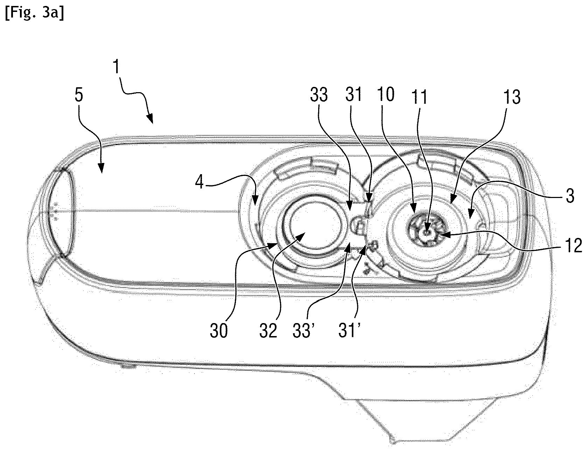

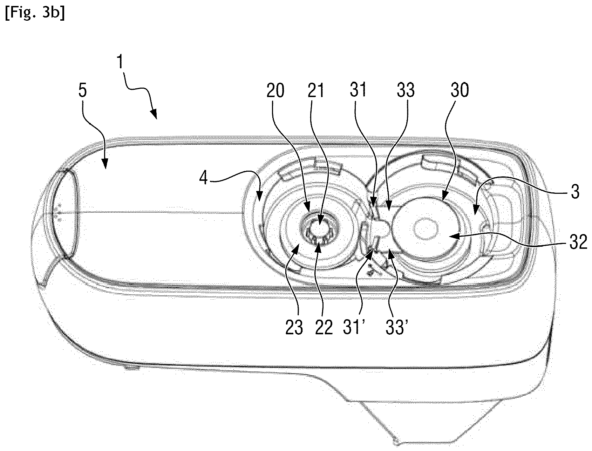

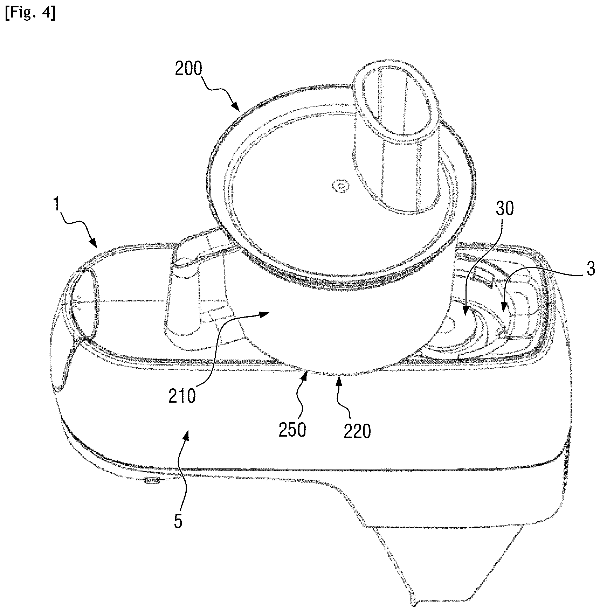

Le volet 30 de sécurité est un volet 30 pivotant adapté pour recouvrir alternativement l'une ou l'autre des deux sorties d'entraînement 10, 20. Le volet 30 obture une sortie d'entraînement 10, 20 lorsqu'il est rabattu dans la première configuration ou dans la deuxième configuration. Dans la première configuration, le volet 30 bloque l'accès de l'utilisateur à la première sortie d'entraînement 10, ainsi qu'illustré à titre d'exemple non limitatif en figures 3B et 4. Dans la deuxième configuration, le volet 30 bloque l'accès de l'utilisateur à la deuxième sortie d'entraînement 20, ainsi qu'illustré à titre d'exemple non limitatif en figure 3A.

Dans la première configuration et/ou dans la deuxième configuration, le volet 30 peut reposer contre la base 1, au contact de la base 1.

Pour pouvoir mettre en place le deuxième accessoire 200 sur la deuxième sortie d'entraînement 20, l'utilisateur doit faire pivoter le volet 30, qui pouvait par exemple être dans la deuxième configuration, de sorte à découvrir la deuxième sortie d'entraînement 20. L'utilisateur rabat au moins partiellement le volet 30 de sorte à recouvrir la première sortie d'entraînement 10, c'est-à-dire qu'il fait pivoter le volet 30 à proximité de la première configuration. En revanche, il arrive que par inadvertance, l'utilisateur ne rabatte pas complètement le volet 30 dans la première configuration. Le volet 30 ne repose alors pas sur la base 1, et/ou ne recouvre pas entièrement la première sortie d'entraînement 10.

La coopération du volet 30 avec le deuxième accessoire 200 lors de la mise en place du deuxième accessoire 200 sur la deuxième sortie d'entraînement 20 permet d'achever le rabattement complet du volet 30 dans la première configuration, de sorte à assurer le recouvrement total de la première sortie d'entraînement 10. Ainsi, si le volet 30 était déjà correctement rabattu dans la première configuration par l'utilisateur, alors la mise en place du deuxième accessoire 200 sur la deuxième sortie d'entraînement 20 ne modifie pas la position du volet 30. Mais si le volet 30 était seulement partiellement rabattu par l'utilisateur, alors la mise en place du deuxième accessoire 200 sur la deuxième sortie d'entraînement 20 achève de faire pivoter le volet 30 pour atteindre la première configuration.

La coopération du volet 30 avec le deuxième accessoire 200 forme ainsi une sécurité mécanique assurant automatiquement un rabattement correct du volet 30 contre la base 1 dans la première configuration, donc un recouvrement total de la première sortie d'entraînement 10 non utilisée, lorsque le deuxième accessoire 200 est mis en place sur la deuxième sortie d'entraînement 20. Cette sécurité mécanique permet d'assurer automatiquement la sécurité de l'utilisateur et/ou d'augmenter le sentiment de sécurité de l'utilisateur du fait que la première sortie d'entraînement 10, qui n'est pas utilisée, ne tourne pas à l'air libre. En outre, cette sécurité mécanique est assurée par le volet 30 lui-même, donc sans nécessiter de moyens additionnels. Cette sécurité mécanique est ainsi plus simple, moins chère, et plus robuste, qu'une sécurité électronique de type interrupteur sur lequel le volet 30 appuierait lorsqu'il atteint la première configuration.

En outre, la coopération entre le volet 30 et le deuxième accessoire 200 permet de maintenir le volet 30 dans la première configuration lorsque le deuxième accessoire 200 est mis en place sur la deuxième sortie d'entraînement 20, c'est-à-dire d'empêcher le relevage du volet 30 lors du fonctionnement du dispositif. Ainsi, l'accès à la première sortie d'entraînement 10, qui correspond à la sortie d'entraînement non utilisée, est empêché pour l'utilisateur pendant toute la durée de l'entraînement du deuxième accessoire 200 par la base 1, ce qui permet d'augmenter encore la sécurité de l'appareil électroménager.

La base 1 forme un boîtier motorisé, le moteur étant logé dans la base 1.

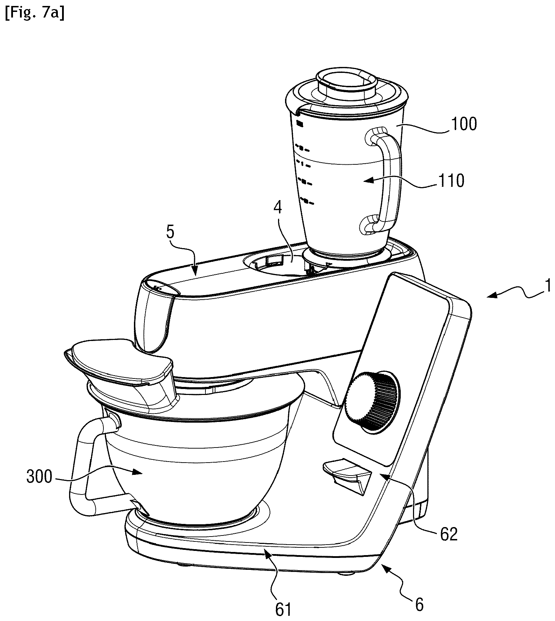

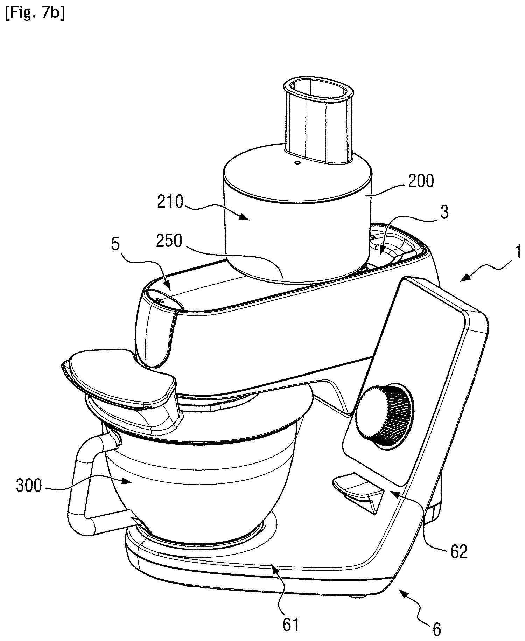

La base 1 peut comprendre, ainsi qu'illustré à titre d'exemple non limitatif en figures 1, 7A et 7B, un socle 6 et une tête 5. Le socle 6 comprend une embase 61 et une partie de jonction 62 avec la tête 5. L'embase 61 est destinée à reposer sur un plan de travail horizontal et comprend une zone d'accueil configurée pour recevoir un récipient de travail 300, tel qu'une cuve, généralement amovible. La partie de jonction 62 est destinée à raccorder l'embase 61 et la tête 5.

La tête 5 s'étend principalement selon une direction longitudinale, en regard de l'embase 61, en surplomb au-dessus de l'embase 61 et le cas échéant du récipient de travail 300. La tête 5 de la base 1 peut comprendre une face supérieure et une face inférieure opposée à la face supérieure, la face inférieure de la tête 5 de la base 1 étant disposée en regard d'une face supérieure du socle 6 de la base 1. La face supérieure de la tête 5 de la base 1 peut s'étendre sensiblement dans un plan horizontal comprenant la direction longitudinale et une direction latérale perpendiculaire à la direction longitudinale.

Dans la suite de la demande, les termes « supérieur » et « inférieur » sont utilisés en relation avec une direction verticale perpendiculaire au plan horizontal, de sorte que le socle 6 correspond à un élément inférieur et la tête 5 correspond à un élément supérieur.

La première sortie d'entraînement 10 est adaptée pour entraîner le premier accessoire 100 en rotation autour d'un axe de rotation qui peut être orienté sensiblement dans la direction verticale. De même, la deuxième sortie d'entraînement 20 est adaptée pour entraîner le deuxième accessoire 200 en rotation autour d'un axe de rotation qui peut être orienté sensiblement dans la direction verticale.

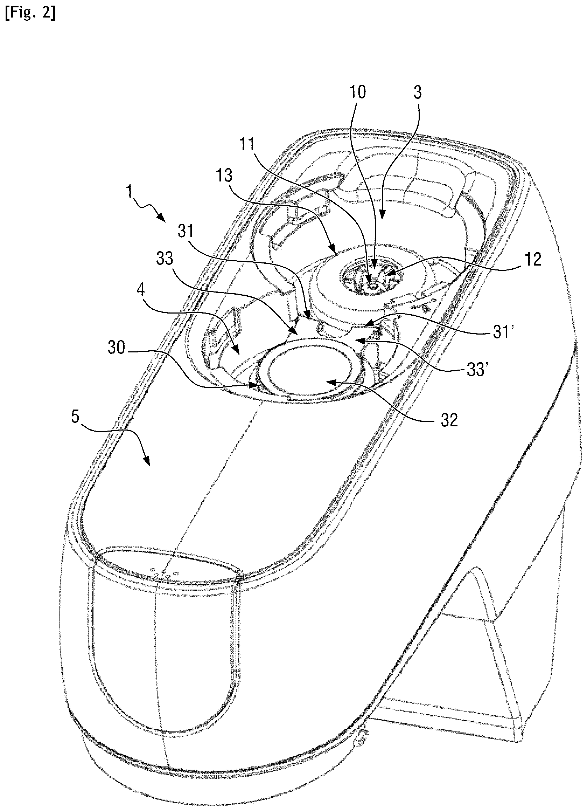

La base 1, en particulier la tête 5 de la base 1, peut comprendre un premier emplacement 3 et un deuxième emplacement 4, ainsi qu'illustré à titre d'exemple non limitatif en figures 2, 3A et 3B. Le premier emplacement 3 est configuré pour recevoir le premier accessoire 100. Le deuxième emplacement 4 est configuré pour recevoir le deuxième accessoire 200. La première sortie d'entraînement 10 est agencée dans le premier emplacement 3, et la deuxième sortie d'entraînement est agencée dans le deuxième emplacement 4.

Lorsque le premier accessoire 100 est reçu dans le premier emplacement 3, la première sortie d'entraînement 10 peut entraîner en rotation le premier accessoire 100, par le biais d'un outil rotatif du premier accessoire 100 qui vient en prise avec la première sortie d'entraînement 10. Lorsque le deuxième accessoire 200 est reçu dans le deuxième emplacement 4, la deuxième sortie d'entraînement 20 peut entraîner en rotation le deuxième accessoire 200, par le biais d'un outil rotatif du deuxième accessoire 200 qui vient en prise avec la deuxième sortie d'entraînement 20.

Le premier emplacement 3 et le deuxième emplacement 4 peuvent être formés dans une face supérieure de la base 1, en particulier dans une face supérieure de la tête 5 de la base 1. Le premier emplacement 3 et le deuxième emplacement 4 peuvent correspondre à des renfoncements ménagés dans la base 1. Le premier emplacement 3 et le deuxième emplacement 4 peuvent être espacés l'un de l'autre dans la direction longitudinale.

Dans la suite de la demande, les termes « avant » et « arrière » sont définis en relation avec la direction longitudinale, de sorte que le premier emplacement 3 correspond à un emplacement arrière et que le deuxième emplacement 4 correspond à un emplacement avant.

Le premier emplacement 3 et le deuxième emplacement 4 peuvent être adjacents l'un à l'autre, une extrémité du premier emplacement 3 étant confondue avec une extrémité du deuxième emplacement 4, les extrémités adjacentes du premier emplacement 3 et du deuxième emplacement 4 formant une frontière entre le premier emplacement 3 et le deuxième emplacement 4. La frontière entre le premier emplacement 3 et le deuxième emplacement 4 peut s'étendre sensiblement selon la direction latérale. La charnière 31 du volet 30 peut être montée sur la base 1 sensiblement au niveau de la frontière entre le premier emplacement 3 et le deuxième emplacement 4.

La charnière 31 s'étend suivant un axe de charnière, de sorte à autoriser un pivotement du volet 30 autour de l'axe de charnière. Le volet 30 peut être mobile entre la première position et la deuxième position par pivotement de 180° autour de l'axe de charnière.

Le volet 30 peut être monté sur la base 1 entre la première sortie d'entraînement 10 et la deuxième sortie d'entraînement 20. Plus particulièrement, la charnière 31 du volet 30 peut être montée sur la base 1 sensiblement à égale distance entre la première sortie d'entraînement 10 et la deuxième sortie d'entraînement 20. Ainsi, l'axe de pivotement du volet 30, qui correspond à l'axe de charnière, est sensiblement équidistant de la première sortie d'entraînement 10 et de la deuxième sortie d'entraînement 20.

L'axe de charnière peut être orienté sensiblement dans la direction latérale perpendiculaire à la direction longitudinale principale de la tête 5 de la base 1. Ainsi, le volet 30 est pivotant autour d'un axe de charnière sensiblement latéral, le pivotement du volet 30 modifiant sa position longitudinale par rapport à la base 1. Dans la première configuration, le volet 30 obture la première sortie d'entraînement 10, le volet 30 reposant en une position longitudinale arrière. Dans la deuxième configuration, le volet 30 obture la deuxième sortie d'entraînement 20, le volet 30 reposant en une position longitudinale avant.

L'axe de charnière peut être incliné de quelques degrés, dans un plan horizontal, par rapport à la direction latérale. En particulier, l'axe de charnière peut être orienté suivant une direction transversale correspondant à une direction perpendiculaire à la direction verticale, et sensiblement tangente à une paroi de corps 210 du deuxième accessoire 200 au niveau de l'endroit où la charnière 31 est montée sur la base 1.

Le premier emplacement 3, respectivement le deuxième emplacement 4, peut présenter un fond horizontal et une paroi verticale orientée sensiblement dans la direction verticale et reliant le fond du premier emplacement 3, respectivement du deuxième emplacement 4, à la face supérieure de la base 1. Le premier emplacement 3, respectivement le deuxième emplacement 4, forme ainsi un renfoncement vertical de la base 1. La paroi verticale du premier emplacement 3, respectivement du deuxième emplacement 4, peut s'étendre de manière sensiblement cylindrique sur un secteur angulaire donné, et comprendre deux bords verticaux formant des extrémités de la paroi verticale. Les deux bords verticaux de la paroi verticale du premier emplacement 3 coïncident avec les deux bords verticaux de la paroi verticale du deuxième emplacement 4. La frontière entre le premier emplacement 3 et le deuxième emplacement 4 est située entre les deux bords verticaux de la paroi verticale, la frontière étant située au niveau d'un espace ouvert entre le premier emplacement 3 et le deuxième emplacement 4. Le premier emplacement 3 et le deuxième emplacement 4 présentent respectivement une première hauteur et une deuxième hauteur, correspondant à une dimension de la paroi verticale dans la direction verticale.

La charnière 31 peut être montée sur la paroi verticale du premier emplacement 3 et/ou du deuxième emplacement 4, en particulier sur l'un des bords verticaux du premier emplacement 3 et du deuxième emplacement 4. La charnière 31 peut être montée sur la paroi verticale à une hauteur qui correspond sensiblement à une hauteur de la première sortie d'entraînement 10, par exemple sensiblement à mi-hauteur de la paroi verticale. Ainsi, le volet 30 dans la première configuration s'étend horizontalement dans le premier emplacement 3, sensiblement à mi-hauteur du premier emplacement 3, et dans la deuxième configuration s'étend horizontalement dans le deuxième emplacement 4, sensiblement à mi-hauteur du deuxième emplacement 4.

Dans la première configuration et dans la deuxième configuration, la plaque d'obturation 32 du volet 30 peut s'étendre sensiblement dans un plan horizontal. Lorsque le volet 30 n'est pas complètement rabattu par l'utilisateur dans la première configuration ou dans la deuxième configuration, le volet 30 s'étend alors dans une configuration intermédiaire dans laquelle la plaque d'obturation 32 présente une inclinaison non nulle par rapport au plan horizontal et peut ne recouvrir que partiellement, voire pas du tout, la première sortie d'entraînement 10.

La plaque d'obturation 32 comprend une première face et une deuxième face opposée à la première face. Lorsque le volet 30 est dans la première configuration, la première face de la plaque d'obturation 32 forme une face inférieure du volet 30. Dans la deuxième configuration, la première face de la plaque d'obturation 32 forme une face supérieure du volet 30.

La plaque d'obturation 32 peut présenter des dimensions inférieures aux dimensions du fond du premier emplacement 3 et/ou du deuxième emplacement 4. Ainsi, dans la première configuration, la plaque d'obturation 32 du volet 30 repose sur le fond du premier emplacement 3, de sorte à recouvrir la première sortie d'entraînement 10. Dans la deuxième configuration, la plaque d'obturation 32 du volet 30 repose sur le fond du deuxième emplacement 4, de sorte à recouvrir la deuxième sortie d'entraînement 20. La plaque d'obturation 32 du volet 30 présente donc de faibles dimensions, en particulier des dimensions largement inférieures aux dimensions de la tête 5 de la base 1, ce qui permet de loger le volet 30 dans le premier emplacement 3 et le deuxième emplacement 4, la charnière 31 étant montée sur la base 1 entre le premier emplacement 3 et le deuxième emplacement 4. Les dimensions réduites de la plaque d'obturation 32 permettent de réduire le coût et le poids du volet 30, et de faciliter la manipulation du volet 30 par l'utilisateur.

La première sortie d'entraînement 10 peut comprendre un premier arbre de sortie 11 et un premier entraîneur 12 solidaire en rotation du premier arbre de sortie 11. La deuxième sortie d'entraînement 20 peut comprendre un deuxième arbre de sortie 21 et un deuxième entraîneur 22 solidaire en rotation du deuxième arbre de sortie 21.

Le premier arbre de sortie 11 et le deuxième arbre de sortie 21 sont chacun entraînés par le moteur, le cas échéant à des vitesses de rotation différentes. Le premier arbre de sortie 11 et le deuxième arbre de sortie 21 peuvent s'étendre chacun sensiblement dans la direction verticale, de sorte à entraîner respectivement le premier accessoire 100 et le deuxième accessoire 200 en rotation autour d'un axe sensiblement vertical.

Le premier entraîneur 12 est adapté pour entraîner en rotation un outil rotatif du premier accessoire 100 lorsque le premier accessoire 100 est en place dans le premier emplacement. Le premier entraîneur 12 est disposé autour du premier arbre de sortie 11. Le deuxième entraîneur 22 est adapté pour entraîner en rotation un outil rotatif du deuxième accessoire 200 lorsque le deuxième accessoire 200 est en place dans le deuxième emplacement. Le deuxième entraîneur 22 est disposé autour du deuxième arbre de sortie 21.

La plaque d'obturation 32 du volet 30 peut être adaptée pour recouvrir entièrement le premier arbre de sortie 11 et pour recouvrir entièrement le premier entraîneur 12 lorsque le volet 30 est dans la première configuration. De même, la plaque d'obturation 32 du volet 30 peut être adaptée pour recouvrir entièrement le deuxième arbre de sortie 21 et pour recouvrir entièrement le deuxième entraîneur 22 lorsque le volet 30 est dans la deuxième configuration.

Dans l'exemple de réalisation illustré sur les figures, la plaque d'obturation 32 recouvre entièrement respectivement le premier entraîneur 12 et le deuxième entraîneur 22 lorsque le volet 30 est respectivement dans la première configuration et dans la deuxième configuration. A titre de variante, la plaque d'obturation 32 peut recouvrir seulement partiellement respectivement le premier entraîneur 12 et le deuxième entraîneur 22 lorsque le volet 30 est respectivement dans la première configuration et dans la deuxième configuration.

Une première protubérance de fond 13 peut être disposée de sorte à entourer le premier entraîneur 12. Ainsi lorsque le volet 30 est dans la première configuration, la plaque d'obturation 32 du volet 30 peut reposer sur la première protubérance de fond 13 et recouvrir intégralement la partie active de la première sortie d'entraînement 10, à savoir le premier arbre de sortie 11 et le premier entraîneur 12. Une deuxième protubérance de fond 23 peut être disposée de sorte à entourer le deuxième entraîneur 22. Ainsi lorsque le volet 30 est dans la deuxième configuration, la plaque d'obturation 32 du volet 30 peut reposer sur la deuxième protubérance de fond 23 et recouvrir intégralement la partie active de la deuxième sortie d'entraînement 20, à savoir le deuxième arbre de sortie 21 et le deuxième entraîneur 22.

La plaque d'obturation 32 du volet 30 présente donc des dimensions encore plus faibles tout en permettant d'interdire à l'utilisateur l'accès à la sortie d'entraînement non utilisée du fait que la plaque d'obturation 32 recouvre le premier arbre de sortie 11. Cela permet de réduire encore le coût et le poids du volet 30, et de faciliter la manipulation du volet 30 par l'utilisateur.

Le volet 30 peut comprendre un bras 33 reliant la charnière 31 à la plaque d'obturation 32. Le bras 33 peut s'étendre sensiblement dans un plan horizontal, principalement dans la direction longitudinale, lorsque le volet 30 est dans la premier configuration ou dans la deuxième configuration. Ainsi, le bras 33 impose une distance dans la direction longitudinale entre la charnière 31 et la plaque d'obturation 32.

Le bras 33 du volet 30 peut s'étendre sensiblement dans le prolongement de la plaque d'obturation 32. En particulier, le bras 33 du volet 30 peut former une plaque sensiblement plane s'étendant dans le prolongement de la plaque d'obturation 32, le bras 33 et la plaque 30 formant une surface continue et le cas échéant sensiblement plane. Un bras 33 plan permet une conception simple du volet 30.

La plaque d'obturation 32 du volet 30 peut former une plaque sensiblement plane. La plaque d'obturation 32 peut présenter une forme de disque. La plaque d'obturation 32 du volet 30 présente des dimensions adaptées pour recouvrir la première sortie d'entraînement 10 lorsque le volet 30 est dans la première configuration, et pour recouvrir la deuxième sortie d'entraînement 20 lorsque le volet 30 est dans la deuxième configuration. Une plaque d'obturation 32 plane permet une conception simple du volet 30.

Le volet 30 peut comprendre un bras supplémentaire 33' et une charnière supplémentaire 31' prévue pour être montée sur la base 1 de sorte à permettre un pivotement du volet 30 par rapport à la base 1. Le bras supplémentaire 33' relie la charnière supplémentaire 31' à la plaque d'obturation 32. Ainsi, le volet 30 comprend deux bras 33 et deux charnières, chaque charnière étant reliée à la plaque d'obturation 32 par un bras respectif du volet 30.

La charnière 31 et la charnière supplémentaire 31' peuvent être montées en face l'une de l'autre, sur deux côtés opposés de la base 1. La charnière 31 et la charnière supplémentaire 31' peuvent être montées sur deux côtés opposés de la frontière entre le premier emplacement 3 et le deuxième emplacement 4, en particulier être montées chacune sur l'un des bords verticaux de la paroi verticale du premier et du deuxième emplacement 3,4. La charnière 31 et la charnière supplémentaire 31' sont espacées l'une de l'autre dans la direction latérale.

L'axe de charnière supplémentaire peut être sensiblement coaxial de l'axe de charnière 31 et être orienté dans la direction latérale, ou peut être incliné de quelques degrés par rapport à la direction latérale et à l'axe de charnière. En particulier, l'axe de charnière supplémentaire peut être orienté suivant la direction transversale au niveau de l'endroit où la charnière supplémentaire est montée sur la base 1.

Le bras supplémentaire 33' peut s'étendre sensiblement parallèlement au bras 33, dans un même plan que le bras 33. Le bras 33 et le bras supplémentaire 33' peuvent être espacés l'un de l'autre dans la direction latérale.

Le bras 33 et le bras supplémentaire 33' peuvent présenter des formes et des dimensions telles qu'un espace entre le bras 33 et le bras supplémentaire 33' est sensiblement en forme de demi-cercle, c'est-à-dire en forme de C, la charnière 31 et la charnière supplémentaire 31' étant situées respectivement au niveau de chaque extrémité du C.

Le bras 33 du volet 30 peut être configuré pour coopérer avec une butée d'appui 201 prévue sur le deuxième accessoire 200 de sorte à assurer une mise en place et un maintien du volet 30 dans la première configuration lorsque le deuxième accessoire 200 est mis en place sur la deuxième sortie d'entraînement 20. Plus particulièrement, une face supérieure du bras 33 du volet 30 peut présenter des dimensions adaptées pour former une surface de réception de la butée d'appui 201 prévue sur le deuxième accessoire 200 lorsque le deuxième accessoire 200 est mis en place sur la deuxième sortie d'entraînement 20.

Le volet 30 peut être configuré pour coopérer en outre avec une butée d'appui supplémentaire prévue sur le premier accessoire 100 de sorte à assurer une mise en place et un maintien du volet 30 dans la deuxième configuration lorsque le premier accessoire 100 est mis en place sur la première sortie d'entraînement 10, ainsi qu'illustré à titre d'exemple non limitatif en figure 7A. Ainsi, la mise en place du premier accessoire 100 sur la première sortie d'entraînement 10 achève de faire pivoter le volet 30 pour le rabattre complètement dans la deuxième configuration, notamment dans le cas où le volet 30 est seulement partiellement rabattu vers la deuxième configuration par l'utilisateur. Le volet 30 forme ainsi une sécurité mécanique assurant automatiquement le recouvrement total de la deuxième sortie d'entraînement 20 non utilisée lorsque le premier accessoire 100 est mis en place sur la première sortie d'entraînement 10, assurant de ce fait automatiquement la sécurité de l'utilisateur et/ou augmentant le sentiment de sécurité de l'utilisateur. Cette sécurité mécanique est assurée par le volet 30 lui-même, sans nécessiter de moyens additionnels, et est ainsi plus simple, moins chère, et plus robuste, qu'une sécurité électronique de type interrupteur sur lequel le volet 30 appuierait lorsqu'il est dans la première configuration. Enfin, la coopération entre le volet 30 et le premier accessoire 100 permet d'empêcher le relevage du volet 30 lors du fonctionnement du dispositif, et ainsi d'empêcher l'accès de l'utilisateur à la deuxième sortie d'entraînement 20 non utilisée pendant toute la durée de l'entraînement du premier accessoire 100.

Le volet 30 peut comprendre en outre une face de contact 34 reliée au bras 33 du volet 30, la charnière 31 formant une jonction entre la face de contact 34 et le bras 33. Lorsque le volet 30 est dans la première configuration ou dans la deuxième configuration, la face de contact 34 s'étend sensiblement perpendiculairement au bras 33 et à la plaque d'obturation 32.

La face de contact 34 du volet 30 peut être prévue pour être logée dans un renfoncement 101 du premier accessoire 100 de sorte à limiter un pivotement du volet 30 lorsque le volet 30 est dans la deuxième configuration et que le premier accessoire 100 est mis sur place sur la première sortie d'entraînement 10.

En alternative ou en outre, la face de contact 34 du volet 30 peut être prévue pour être logée dans un renfoncement du deuxième accessoire 200 de sorte à limiter un pivotement du volet 30 lorsque le volet 30 est dans la première configuration et que le deuxième accessoire 200 est mis sur place sur la deuxième sortie d'entraînement 20.

Une telle coopération entre la face de contact 34 et le premier accessoire 100 ou le deuxième accessoire 200 permet de limiter le relevage du volet 30 lorsque le premier accessoire 100 ou le deuxième accessoire 200 est mis en place sur la sortie d'entraînement correspondante. En d'autres termes, cette coopération contribue à maintenir le volet 30 en place dans la première configuration ou dans la deuxième configuration lors du fonctionnement du dispositif. Ainsi, l'accès à la sortie d'entraînement non utilisée est empêché pour l'utilisateur pendant toute la durée de l'entraînement.

Le volet 30 peut comprendre en outre une face de contact supplémentaire 34' reliée au bras supplémentaire 33' du volet 30, la charnière supplémentaire 31' formant une jonction entre la face de contact supplémentaire 34' et le bras supplémentaire 33'. La face de contact supplémentaire 34' peut s'étendre sensiblement parallèlement à la face de contact 34 et être espacée de la face de contact 34 dans la direction latérale d'une distance sensiblement identique à une distance séparant la charnière 31 de la charnière supplémentaire 31'.

La face de contact supplémentaire 34' du volet 30 peut être prévue pour être logée dans un renfoncement supplémentaire 101' du premier accessoire 100 de sorte à limiter un pivotement du volet 30 lorsque le volet 30 est dans la deuxième configuration et que le premier accessoire 100 est mis sur place sur la première sortie d'entraînement 10. Le renfoncement supplémentaire 101' et le renfoncement 101 peuvent correspondre à un même renfoncement, ou à deux renfoncements distincts et espacés l'un de l'autre, en particulier dans la direction latérale.

En alternative ou en outre, la face de contact supplémentaire 34' du volet 30 peut être prévue pour être logée dans un renfoncement supplémentaire du deuxième accessoire 200 de sorte à limiter un pivotement du volet 30 lorsque le volet 30 est dans la première configuration et que le deuxième accessoire 200 est mis sur place sur la deuxième sortie d'entraînement 20.

Ainsi, la face de contact supplémentaire 34' contribue à limiter encore davantage le relevage du volet 30 et à maintenir encore mieux le volet 30 en place lorsque le premier accessoire 100 ou le deuxième accessoire 200 est mis en place sur la première sortie d'entraînement 10 ou la deuxième sortie d'entraînement 20 correspondante.

Le moteur est agencé à l'intérieur de la base 1, en particulier le moteur peut être agencé à l'intérieur de la tête 5 de la base 1. Le moteur comprend un arbre moteur orienté selon un axe moteur qui, suivant les conceptions, peut être horizontal ou vertical. En alternative, le moteur peut être agencé dans le socle 6.

La base 1 peut comprendre en outre un réducteur adapté pour réduire une vitesse d'entraînement en rotation de la deuxième sortie d'entraînement 20 par rapport à une vitesse d'entraînement en rotation de la première sortie d'entraînement 10.

Le réducteur est monté sur l'arbre moteur, en particulier le réducteur peut comprendre une entrée adaptée pour être entraînée en rotation par l'arbre moteur, et une sortie adaptée pour être entraînée en rotation par le réducteur à une vitesse réduite. La première sortie d'entraînement 10 est montée directement sur l'arbre moteur, en particulier par l'intermédiaire du premier arbre de sortie 11. La deuxième sortie d'entraînement 20 est montée sur la sortie du réducteur, en particulier par l'intermédiaire du deuxième arbre de sortie 21.

La première sortie d'entraînement 10 est donc une sortie grande vitesse à entraînement direct par le moteur, et la deuxième sortie d'entraînement 20 est une sortie basse vitesse, c'est-à-dire présentant une vitesse d'entraînement en rotation plus faible que la première sortie d'entraînement 10, qui est entraînée par l'ensemble moteur et réducteur. La première sortie d'entraînement 10 est donc adaptée pour entraîner en rotation le premier accessoire 100 à une vitesse plus élevée qu'une vitesse d'entraînement en rotation du deuxième accessoire 200 par la deuxième sortie d'entraînement 20. La présence du réducteur permet d'adapter les vitesses d'entraînement en rotation aux accessoires 100, 200, afin d'optimiser le fonctionnement des accessoires 100, 200.

Le premier accessoire 100 peut être un accessoire grande vitesse, tel qu'un bol mixeur, ou bol blender, et le deuxième accessoire 200 être un accessoire basse vitesse, tel qu'un bol robot multifonctions, par exemple un bol robot multifonctions pouvant hacher des aliments avec un couteau rotatif, et/ou râper des aliments avec des disques rotatifs, et/ou extraire du jus avec un organe presse-agrumes. Le premier accessoire 100 peut présenter une gamme de vitesse d'entraînement en rotation optimale qui correspond à des vitesses de rotation plus élevées qu'une gamme de vitesse d'entraînement en rotation du deuxième accessoire 200.

La coopération entre le volet 30 et le deuxième accessoire 200 permet d'assurer le rabattement du volet 30 et son maintien dans la première configuration et assure ainsi que la première sortie d'entraînement 10, c'est-à-dire la sortie à grande vitesse, ne tourne pas à l'air libre et n'est pas accessible à l'utilisateur lorsqu'elle n'est pas utilisée. En effet, la vitesse de rotation de la première sortie d'entraînement 10 étant plus élevée que celle de la deuxième sortie d'entraînement 20, elle est davantage susceptible de poser des problèmes de sécurité et/ou de conférer un sentiment de danger à l'utilisateur si elle n'est pas entièrement recouverte.

Un accessoire pour un appareil électroménager de préparation culinaire, formant un deuxième accessoire 200 adapté pour être mis en place de manière amovible sur et être entraîné en rotation par la deuxième sortie d'entraînement 20 d'une base 1 telle que décrite ci-dessus, comprend une paroi de fond 220 adaptée pour être disposée en regard de la base 1 lorsque le deuxième accessoire 200 est mis en place sur la deuxième sortie d'entraînement 20, et une butée d'appui 201 configurée pour venir en appui contre le volet 30 de sorte à assurer la mise en place et le maintien du volet 30 dans la première configuration lorsque le deuxième accessoire 200 est mis en place sur la deuxième sortie d'entraînement 20.

La paroi de fond 220 du deuxième accessoire 200 peut être une paroi en forme de disque et s'étendre sensiblement dans un plan horizontal lorsque le deuxième accessoire 200 est mis en place sur la deuxième sortie d'entraînement 20. La paroi de fond 220 peut présenter une zone centrale adaptée pour être entraînée en rotation par la deuxième sortie d'entraînement 20. En particulier, le deuxième accessoire 200 peut comprendre un outil rotatif adapté pour s'étendre à travers une ouverture centrale de la paroi de fond 220 de sorte à venir en prise avec la deuxième sortie d'entraînement 20. La paroi de fond 220 du deuxième accessoire 200 peut reposer au contact de la base 1, en particulier reposer sur le deuxième entraîneur 22, lorsque le deuxième accessoire 200 est mis en place sur la deuxième sortie d'entraînement 20. Le deuxième entraîneur 22 permet d'entraîner en rotation et de guider la rotation du deuxième accessoire 200.

Le deuxième accessoire 200 comprend en outre une paroi de corps 210 définissant avec la paroi de fond 220 un réservoir adapté pour recevoir un aliment. La paroi de corps 210 s'étend sensiblement autour d'un axe du deuxième accessoire 200, et peut être sensiblement cylindrique autour de l'axe du deuxième accessoire 200, la paroi de corps 210 présentant une courbure. L'axe du deuxième accessoire 200 peut être orienté sensiblement dans la direction verticale. Une direction transversale en un point donné de la paroi de corps 210 du deuxième accessoire 200 correspond à une direction perpendiculaire à la direction verticale, et tangente à la paroi de corps 210 du deuxième accessoire 200 au point donné.

Dans la suite de la demande, les termes « interne » et « externe » sont utilisés en relation avec l'axe du deuxième accessoire 200, une face interne d'un élément étant située plus proche de l'axe du deuxième accessoire 200 qu'une face externe du même élément.

La paroi de fond 220 et la paroi de corps 210 du deuxième accessoire 200 sont raccordées au niveau d'une jonction 250. Notamment, lorsque l'axe du deuxième accessoire 200 est vertical et que la paroi de fond 220 s'étend dans un plan horizontal et est en forme de disque, la jonction 250 entre la paroi de fond 220 et la paroi de corps 210 est sensiblement circulaire et s'étend dans un plan horizontal.

La butée d'appui 201 du deuxième accessoire 200 est configurée pour s'étendre à l'intérieur du premier emplacement 3, de sorte à venir en appui contre le bras 33 du volet 30 situé dans le premier emplacement 3, lorsque le deuxième accessoire 200 est mis en place sur la deuxième sortie d'entraînement 20. Ainsi, la butée d'appui 201 empêche efficacement le relevage du volet 30 et assure son maintien en place dans la première configuration.

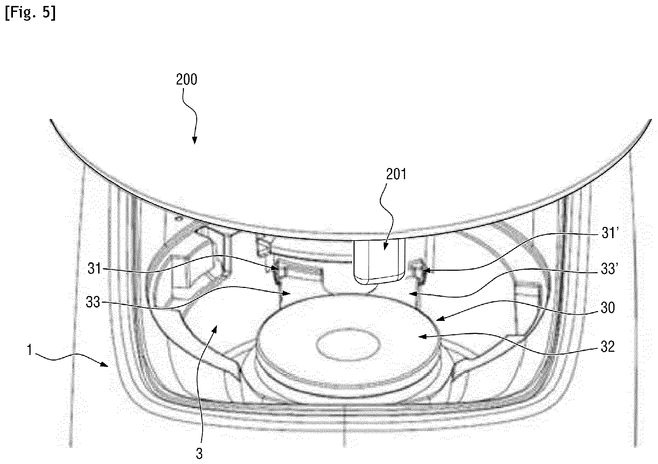

La butée d'appui 201 du deuxième accessoire 200 peut être formée par un ergot du deuxième accessoire 200, ainsi qu'illustré à titre d'exemple non limitatif en figure 5.

L'ergot 201 fait saillie par rapport à une paroi du deuxième accessoire 200. L'ergot 201 peut s'étendre sensiblement parallèlement à l'axe du deuxième accessoire 200 depuis la jonction 250 entre la paroi de fond 220 et la paroi de corps 210 du deuxième accessoire 200.

Notamment, lorsque l'axe du deuxième accessoire 200 est orienté selon la direction verticale, l'ergot 201 peut être orienté dans la direction verticale et dans la direction transversale, l'ergot 201 présentant une courbure correspondant sensiblement à la courbure de la paroi de corps 210 du deuxième accessoire 200. L'ergot 201 s'étend vers la base 1, c'est-à-dire vers le bas, depuis le deuxième accessoire 200. Lorsque l'ergot 201 appuie contre le bras 33 du volet 30, l'ergot 201 bloque le pivotement du bras 33 du volet 30.

L'ergot 201 peut présenter une dimension dans la direction transversale correspondant sensiblement à une dimension dans la direction transversale du bras 33 de la charnière 31 sur lequel l'ergot 201 vient en appui lorsque le deuxième accessoire 200 est mis en place sur la deuxième sortie d'entraînement 20. Ainsi, l'appui de l'ergot 201 est réparti sur tout le bras 33 de sorte à bloquer efficacement le relevage du bras 33.

Le deuxième accessoire 200 peut comprendre une butée d'appui supplémentaire adaptée pour venir en appui contre le bras supplémentaire 33' du volet 30 lorsque le deuxième accessoire 200 est mis en place sur la deuxième sortie d'entraînement 20. Les caractéristiques de la butée d'appui supplémentaire peuvent être sensiblement identiques aux caractéristiques de la butée d'appui 201 prévue sur le deuxième accessoire 200. En particulier, la butée d'appui supplémentaire peut correspondre à un ergot s'étendant principalement dans la direction verticale et dans la direction transversale, vers le bas à partir de la jonction 250 entre la paroi de corps 210 et la paroi de fond 220 du deuxième accessoire 200, et présentant une dimension transversale qui correspond sensiblement à une dimension transversale du bras supplémentaire 33'. La butée d'appui supplémentaire permet d'améliorer encore la fiabilité du maintien en place et du blocage en pivotement du volet 30 lorsque le deuxième accessoire 200 est mis en place sur la deuxième sortie d'entraînement 20.

Le deuxième accessoire 200 peut par exemple être un bol robot multifonctions, par exemple un bol robot multifonctions pouvant hacher des aliments avec un couteau rotatif, et/ou râper des aliments avec des disques rotatifs, et/ou extraire du jus avec un organe presse-agrumes.

Un renfoncement peut être formé dans la paroi de corps 210 du deuxième accessoire 200. Le renfoncement est adapté pour loger une face de contact 34 du volet 30 lorsque le deuxième accessoire 200 est mis en place sur la deuxième sortie d'entraînement 20. Le renfoncement peut être un renfoncement radial, de sorte que la paroi de corps 210 du deuxième accessoire 200 s'étend localement, au niveau du renfoncement, en une position radialement plus interne, c'est-à-dire plus proche de l'axe du deuxième accessoire 200, que le reste de la paroi de corps 210. La courbure de la paroi de corps 210 au niveau du renfoncement peut correspondre sensiblement à la courbure du reste de la paroi de corps 210.

La face de contact 34 du volet 30 peut présenter une courbure correspondant sensiblement à la courbure de la paroi de corps 210 du deuxième accessoire 200 au niveau du renfoncement. La face de contact 34 du volet 30 peut reposer au contact du renfoncement de la paroi de corps 210 du deuxième accessoire 200, la face de contact 34 étant logée dans le renfoncement en appui contre la paroi de corps 210, lorsque le deuxième accessoire 200 est mis en place sur la deuxième sortie d'entraînement 20 et que le volet 30 est dans la première configuration.

Un accessoire pour un appareil électroménager de préparation culinaire, formant un premier accessoire 100 adapté pour être mis en place de manière amovible sur et être entraîné en rotation par la deuxième sortie d'entraînement 20 d'une base 1 telle que décrite ci-dessus, comprend une paroi de fond adaptée pour être disposée en regard de la base 1 lorsque le premier accessoire 100 est mis en place sur la première sortie d'entraînement 10, et une paroi de corps 110 définissant avec la paroi de fond un réservoir adapté pour recevoir un aliment.

Les caractéristiques de la paroi de fond et de la paroi de corps 110 du premier accessoire 100 peuvent correspondre sensiblement aux caractéristiques de la paroi de fond 220 et de la paroi de corps 210 du deuxième accessoire 200. En particulier, la paroi de fond du premier accessoire 100 peut présenter sensiblement une forme de disque et s'étendre dans un plan horizontal lorsque le premier accessoire 100 est mis en place sur la première sortie d'entraînement 10, et la paroi de corps 110 peut être sensiblement cylindrique autour d'un axe vertical.

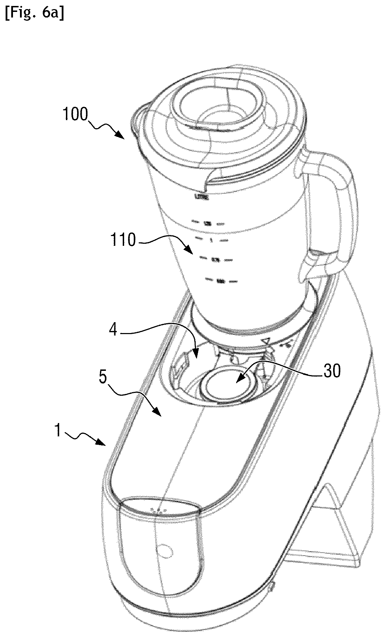

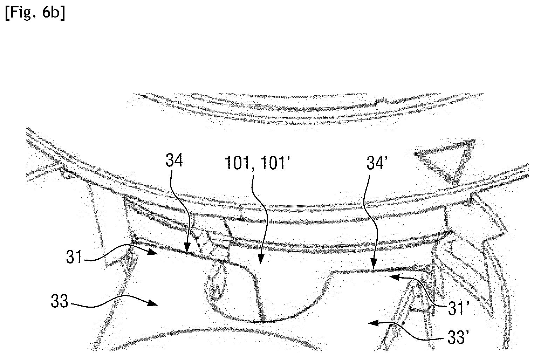

Un renfoncement 101 peut être formé dans la paroi de corps 110 du premier accessoire 100, ainsi qu'illustré à titre d'exemple non limitatif en figures 6A et 6B. Le renfoncement 101 est adapté pour loger une face de contact 34 du volet 30 lorsque le premier accessoire 100 est mis en place sur la première sortie d'entraînement 10. Le renfoncement 101 du premier accessoire 100 peut présenter sensiblement les mêmes caractéristiques que le renfoncement du deuxième accessoire 200 décrit ci-dessus.

Le premier accessoire 100 peut comprendre en outre une butée d'appui configurée pour venir en appui contre le volet 30 de sorte à assurer la mise en place et le maintien du volet 30 dans la deuxième configuration lorsque le premier accessoire 100 est mis en place sur la première sortie d'entraînement 10. La butée d'appui du premier accessoire 100 peut présenter sensiblement les mêmes caractéristiques que la butée d'appui 201 du deuxième accessoire 200 décrit ci-dessus. En particulier, la butée d'appui du premier accessoire 100 peut être formée par un ergot du premier accessoire 100, l'ergot pouvant s'étendre principalement dans la direction verticale et dans la direction transversale, vers le bas à partir d'une jonction entre la paroi de corps 110 et la paroi de fond du premier accessoire 100, l'ergot pouvant présenter une dimension transversale qui correspond sensiblement à une dimension transversale du bras 33 du volet 30.

Le premier accessoire 100 peut par exemple être un bol mixeur, ou bol blender.

Un appareil électroménager de préparation culinaire peut comprendre une base 1 telle que décrite ci-dessus, et un deuxième accessoire 200 tel que décrit ci-dessus.

L'appareil électroménager de préparation culinaire peut comprendre en outre un premier accessoire 100 adapté pour être mis en place de manière amovible sur la première sortie d'entraînement 10 de sorte à être entraîné en rotation par la première sortie d'entraînement 10.

L'appareil électroménager de préparation culinaire peut être un robot pâtissier.

## Revendications

1. Base (1) d'appareil électroménager de préparation culinaire, comprenant :
- une première sortie d'entraînement (10) prévue pour une mise en place de manière amovible et pour entraîner en rotation un premier accessoire (100) ;
- une deuxième sortie d'entraînement (20) prévue pour une mise en place de manière amovible et pour entraîner en rotation un deuxième accessoire (200) ;
- un moteur électrique configuré pour entraîner simultanément en rotation la première sortie d'entraînement (10) et la deuxième sortie d'entraînement (20) ; et
- un volet (30) de sécurité pivotant, comprenant une charnière (31) montée sur la base (1) de sorte à permettre un pivotement du volet (30) par rapport à la base (1), et une plaque d'obturation (32) prévue pour obturer la première sortie d'entraînement (10) et la deuxième sortie d'entrainement (20), ledit volet (30) étant monté pivotant sur la base (1) entre une première configuration dans laquelle la plaque d'obturation (32) du volet (30) recouvre la première sortie d'entraînement (10), la deuxième sortie d'entraînement (20) étant découverte, et une deuxième configuration dans laquelle la plaque d'obturation (32) du volet (30) recouvre la deuxième sortie d'entraînement (20), la première sortie d'entraînement (10) étant découverte,
le volet (30) étant configuré pour coopérer avec le deuxième accessoire (200) de sorte à assurer une mise en place et un maintien du volet (30) dans la première configuration lorsque le deuxième accessoire (200) est mis en place sur la deuxième sortie d'entraînement (20).

2. Base (1) d'appareil électroménager de préparation culinaire selon la revendication 1, dans laquelle la charnière (31) du volet (30) est montée sur la base (1) sensiblement à égale distance entre la première sortie d'entraînement (10) et la deuxième sortie d'entraînement (20).

3. Base (1) d'appareil électroménager de préparation culinaire selon la revendication 1 ou la revendication 2, dans laquelle le volet (30) comprend un bras (33) reliant la charnière (31) à la plaque d'obturation (32).

4. Base (1) d'appareil électroménager de préparation culinaire selon la revendication 3, dans laquelle le bras (33) du volet (30) est configuré pour coopérer avec une butée d'appui (201) prévue sur le deuxième accessoire (200) de sorte à assurer une mise en place et un maintien du volet (30) dans la première configuration lorsque le deuxième accessoire (200) est mis en place sur la deuxième sortie d'entraînement (20).

5. Base (1) d'appareil électroménager de préparation culinaire selon la revendication 3 ou la revendication 4, dans laquelle le bras (33) du volet (30) forme une plaque sensiblement plane s'étendant dans le prolongement de la plaque d'obturation (32).

6. Base (1) d'appareil électroménager de préparation culinaire selon l'une quelconque des revendications 3 à 5, dans laquelle le volet (30) comprend en outre une face de contact (34) reliée au bras (33) du volet (30), la charnière (31) formant une jonction entre la face de contact (34) et le bras (33), dans lequel lorsque le volet (30) est dans la première configuration ou dans la deuxième configuration, la face de contact (34) s'étend sensiblement perpendiculairement au bras (33) et à la plaque d'obturation (32), et dans lequel la face de contact (34) du volet (30) est prévue pour être logée dans un renfoncement (101) du premier accessoire (100) de sorte à limiter un pivotement du volet (30) lorsque le volet (30) est dans la deuxième configuration et que le premier accessoire (100) est mis sur place sur la première sortie d'entraînement (10), et/ou pour être logée dans un renfoncement du deuxième accessoire (100) de sorte à limiter un pivotement du volet (30) lorsque le volet (30) est dans la première configuration et que le deuxième accessoire (200) est mis sur place sur la deuxième sortie d'entraînement (20).

7. Base (1) d'appareil électroménager de préparation culinaire selon l'une quelconque des revendications 3 à 6, dans laquelle le volet (30) comprend un bras supplémentaire (33') et une charnière supplémentaire (31') prévue pour être montée sur la base (1) de sorte à permettre un pivotement du volet (30) par rapport à la base (1), dans laquelle le bras supplémentaire (33') relie la charnière supplémentaire (31') à la plaque d'obturation (32).

8. Base (1) d'appareil électroménager de préparation culinaire selon l'une quelconque des revendications précédentes, dans laquelle le volet (30) est configuré pour coopérer en outre avec une butée d'appui supplémentaire prévue sur le premier accessoire (100) de sorte à assurer une mise en place et un maintien du volet (30) dans la deuxième configuration lorsque le premier accessoire (100) est mis en place sur la première sortie d'entraînement (10).

9. Base (1) d'appareil électroménager de préparation culinaire selon l'une quelconque des revendications précédentes, dans laquelle la première sortie d'entraînement (10) comprend un premier arbre de sortie (11) et un premier entraîneur (12) solidaire en rotation du premier arbre de sortie (11), la deuxième sortie d'entraînement (20) comprend un deuxième arbre de sortie (21) et un deuxième entraîneur (22) solidaire en rotation du deuxième arbre de sortie (21), dans laquelle la plaque d'obturation (32) du volet (30) est adaptée pour recouvrir entièrement le premier arbre de sortie (11) et pour recouvrir entièrement le premier entraîneur (12) lorsque le volet (30) est dans la première configuration, la plaque d'obturation (32) du volet (30) reposant sur le premier entraîneur (12), et dans laquelle la plaque d'obturation (32) du volet (30) est adaptée pour recouvrir entièrement le deuxième arbre de sortie (21) et pour recouvrir entièrement le deuxième entraîneur (22) lorsque le volet (30) est dans la deuxième configuration, la plaque d'obturation (32) du volet (30) reposant sur le deuxième entraîneur (22).

10. Base (1) d'appareil électroménager de préparation culinaire selon l'une des revendications précédentes, comprenant en outre un réducteur adapté pour réduire une vitesse de rotation de la deuxième sortie d'entraînement (20) par rapport à une vitesse de rotation de la première sortie d'entraînement (10).

11. Appareil électroménager de préparation culinaire, comprenant une base (1) selon l'une quelconque des revendications 1 à 10 et un accessoire formant un deuxième accessoire (200) adapté pour être mis en place de manière amovible sur et être entraîné en rotation par la deuxième sortie d'entraînement (20) de la base (1).

12. Appareil électroménager de préparation culinaire selon la revendication 11, dans lequel ledit deuxième accessoire (200) comprend une paroi de fond (210) adaptée pour être disposée en regard de la base (1) lorsque le deuxième accessoire (200) est mis en place sur la deuxième sortie d'entraînement (20), ledit deuxième accessoire (200) comprenant une butée d'appui (201 ) configurée pour venir en appui contre le volet (30) de sorte à assurer la mise en place et le maintien du volet (30) dans la première configuration lorsque le deuxième accessoire (200) est mis en place sur la deuxième sortie d'entraînement (20).

13. Appareil électroménager de préparation culinaire selon la revendication 12, **caractérisé en ce que** la butée d'appui (201) est formée par un ergot du deuxième accessoire (200).

14. Appareil électroménager de préparation culinaire selon la revendication 13, dans lequel ledit deuxième accessoire (200) comprend en outre une paroi de corps (220) définissant avec la paroi de fond (210) un réservoir adapté pour recevoir un aliment, dans lequel la paroi de corps (220) est sensiblement cylindrique autour d'un axe de symétrie, et dans lequel l'ergot (201) s'étend sensiblement parallèlement à l'axe de symétrie depuis une jonction (250) entre la paroi de fond (210) et la paroi de corps (220) du deuxième accessoire (200).

15. Appareil électroménager de préparation culinaire selon l'une quelconque des revendications 11 à 14, dans lequel ledit deuxième accessoire (200) (200) est un bol mini-hachoir.

16. Appareil électroménager de préparation culinaire selon l'une quelconque des revendications 11 à 15, dans lequel ledit deuxième accessoire (200) comprend en outre une paroi de corps (210) dans laquelle est formé un renfoncement adapté pour loger une face de contact (34) du volet (30) lorsque le deuxième accessoire (200) est mis en place sur la deuxième sortie d'entraînement (20).

17. Appareil électroménager de préparation culinaire selon l'une quelconque des revendications 11 à 16, comprenant en outre un premier accessoire (100) adapté pour être mis en place de manière amovible sur la première sortie d'entraînement (10) de sorte à être entraîné en rotation par la première sortie d'entraînement (10).

18. Appareil électroménager de préparation culinaire selon l'une quelconque des revendications 11 à 17, dans lequel l'appareil est un robot pâtissier.

## Patentansprüche

1. Basis (1) eines elektrischen Haushaltsgeräts zur Zubereitung von Speisen, umfassend:
- einen ersten Antriebsausgang (10), der dafür vorgesehen ist, ein erstes Zubehörteil (100) abnehmbar aufzusetzen und in Drehung zu versetzen;
- einen zweiten Antriebsausgang (20), der dafür vorgesehen ist, ein zweites Zubehörteil (200) abnehmbar aufzusetzen und in Drehung zu versetzen;
- einen Elektromotor, der dafür konfiguriert ist, den ersten Antriebsausgang (10) und den zweiten Antriebsausgang (20) gleichzeitig in Drehung zu versetzen; und
- eine schwenkbare Sicherheitsklappe (30) mit einem Scharnier (31), das so an der Basis (1) montiert ist, dass es ein Schwenken der Klappe (30) in Bezug auf die Basis (1) ermöglicht, und einer Verschlussplatte (32), die dafür vorgesehen ist, den ersten Antriebsausgang (10) und den zweiten Antriebsausgang (20) zu verschließen, wobei die Klappe (30) an der Basis (1) schwenkbar zwischen einer ersten Konfiguration, in der die Verschlussplatte (32) der Klappe (30) den ersten Antriebsausgang (10) abdeckt, wobei der zweite Antriebsausgang (20) freigelegt ist, und einer zweiten Konfiguration, in der die Verschlussplatte (32) der Klappe (30) den zweiten Antriebsausgang (20) abdeckt, wobei der erste Antriebsausgang (10) freigelegt ist, montiert ist,
wobei die Klappe (30) dafür konfiguriert ist, mit dem zweiten Zubehörteil (200) zusammenzuwirken, um ein Positionieren und Halten der Klappe (30) in der ersten Konfiguration sicherzustellen, wenn das zweite Zubehörteil (200) auf den zweiten Antriebsausgang (20) aufgesetzt wird.

2. Basis (1) eines elektrischen Haushaltsgeräts zur Zubereitung von Speisen nach Anspruch 1,
wobei das Scharnier (31) der Klappe (30) im Wesentlichen im gleichen Abstand zwischen dem ersten Antriebsausgang (10) und dem zweiten Antriebsausgang (20) an der Basis (1) montiert ist.

3. Basis (1) eines elektrischen Haushaltsgeräts zur Zubereitung von Speisen nach Anspruch 1 oder Anspruch 2,
wobei die Klappe (30) einen Arm (33) umfasst, der das Scharnier (31) mit der Verschlussplatte (32) verbindet.

4. Basis (1) eines elektrischen Haushaltsgeräts zur Zubereitung von Speisen nach Anspruch 3,
wobei der Arm (33) der Klappe (30) dafür konfiguriert ist, mit einem Stützanschlag (201), der an dem zweiten Zubehörteil (200) vorgesehen ist, zusammenzuwirken, um ein Positionieren und Halten der Klappe (30) in der ersten Konfiguration sicherzustellen, wenn das zweite Zubehörteil (200) auf den zweiten Antriebsausgang (20) aufgesetzt wird.

5. Basis (1) eines elektrischen Haushaltsgeräts zur Zubereitung von Speisen nach Anspruch 3 oder Anspruch 4,
wobei der Arm (33) der Klappe (30) eine im Wesentlichen ebene Platte bildet, die sich in der Verlängerung der Verschlussplatte (32) erstreckt.

6. Basis (1) eines elektrischen Haushaltsgeräts zur Zubereitung von Speisen nach einem der Ansprüche 3 bis 5,
wobei die Klappe (30) außerdem eine Kontaktfläche (34) aufweist, die mit dem Arm (33) der Klappe (30) verbunden ist, wobei das Scharnier (31) eine Verbindung zwischen der Kontaktfläche (34) und dem Arm (33) bildet, wobei sich die Kontaktfläche (34), wenn sich die Klappe (30) in der ersten Konfiguration oder in der zweiten Konfiguration befindet, im Wesentlichen senkrecht zu dem Arm (33) und der Verschlussplatte (32) erstreckt, und wobei die Kontaktfläche (34) der Klappe (30) dafür vorgesehen ist, in einer Vertiefung (101) des ersten Zubehörteils (100) aufgenommen zu werden, um ein Schwenken der Klappe (30) zu begrenzen, wenn sich die Klappe (30) in der zweiten Konfiguration befindet und das erste Zubehörteil (100) auf den ersten Antriebsausgang (10) aufgesetzt ist, und/oder in einer Vertiefung des zweiten Zubehörteils (100) aufgenommen zu werden, um ein Schwenken der Klappe (30) zu begrenzen, wenn sich die Klappe (30) in der ersten Konfiguration befindet und das zweite Zubehörteil (200) auf den zweiten Antriebsausgang (20) aufgesetzt ist.

7. Basis (1) eines elektrischen Haushaltsgeräts zur Zubereitung von Speisen nach einem der Ansprüche 3 bis 6,
wobei die Klappe (30) einen zusätzlichen Arm (33') und ein zusätzliches Scharnier (31') umfasst, das für die Montage an der Basis (1) vorgesehen ist, um ein Schwenken der Klappe (30) in Bezug auf die Basis (1) zu ermöglichen, wobei der zusätzliche Arm (33') das Scharnier (31') mit der Verschlussplatte (32) verbindet.

8. Basis (1) eines elektrischen Haushaltsgeräts zur Zubereitung von Speisen nach einem der vorstehenden Ansprüche,
wobei die Klappe (30) dafür konfiguriert ist, weiter mit einem zusätzlichen Stützanschlag, der an dem ersten Zubehörteil (100) vorgesehen ist, zusammenzuwirken, um ein Positionieren und Halten der Klappe (30) in der zweiten Konfiguration sicherzustellen, wenn das erste Zubehörteil (100) auf den ersten Antriebsausgang (10) aufgesetzt wird.

9. Basis (1) eines elektrischen Haushaltsgeräts zur Zubereitung von Speisen nach einem der vorstehenden Ansprüche,
wobei der erste Antriebsausgang (10) eine erste Abtriebswelle (11) und einen ersten drehfest mit der ersten Abtriebswelle (11) verbundenen Mitnehmer (12) umfasst, der zweite Antriebsausgang (20) eine zweite Abtriebswelle (21) und einen zweiten drehfest mit der zweiten Abtriebswelle (21) verbundenen Mitnehmer (22) umfasst,
wobei die Verschlussplatte (32) der Klappe (30) dafür ausgelegt ist, die erste Abtriebswelle (11) vollständig abzudecken und den ersten Mitnehmer (12) vollständig abzudecken, wenn sich die Klappe (30) in der ersten Konfiguration befindet, wobei die Verschlussplatte (32) der Klappe (30) auf dem ersten Mitnehmer (12) aufliegt, und
wobei die Verschlussplatte (32) der Klappe (30) dafür ausgelegt ist, die zweite Abtriebswelle (21) vollständig abzudecken und den zweiten Mitnehmer (22) vollständig abzudecken, wenn sich die Klappe (30) in der zweiten Konfiguration befindet, wobei die Verschlussplatte (32) der Klappe (30) auf dem zweiten Mitnehmer (22) aufliegt.

10. Basis (1) eines elektrischen Haushaltsgeräts zur Zubereitung von Speisen nach einem der vorstehenden Ansprüche, die weiter ein Untersetzungsgetriebe zur Reduzierung einer Drehzahl des zweiten Antriebsausgangs (20) gegenüber einer Drehzahl des ersten Antriebsausgangs (10) umfasst.

11. Elektrisches Haushaltsgerät zur Zubereitung von Speisen mit einer Basis (1) nach einem der Ansprüche 1 bis 10 und einem Zubehörteil, das ein zweites Zubehörteil (200) bildet, das dafür ausgelegt ist, abnehmbar auf den zweiten Antriebsausgang (20) der Basis (1) aufgesetzt und in Drehung versetzt zu werden.

12. Elektrisches Haushaltsgerät zur Zubereitung von Speisen nach Anspruch 11,
wobei das zweite Zubehörteil (200) eine Bodenwand (210) umfasst, die dafür ausgelegt ist, gegenüber der Basis (1) angeordnet zu werden, wenn das zweite Zubehörteil (200) auf den zweiten Antriebsausgang (20) aufgesetzt wird, wobei das zweite Zubehörteil (200) einen Stützanschlag (201) umfasst, der dafür konfiguriert ist, auf der Klappe (30) aufzuliegen, um das Positionieren und das Halten der Klappe (30) in der ersten Konfiguration sicherzustellen, wenn das zweite Zubehörteil (200) auf den zweiten Antriebsausgang (20) aufgesetzt wird.

13. Elektrisches Haushaltsgerät zur Zubereitung von Speisen nach Anspruch 12,
**dadurch gekennzeichnet, dass** der Stützanschlag (201) durch einen Stift des zweiten Zubehörteils (200) gebildet wird.

14. Elektrisches Haushaltsgerät zur Zubereitung von Speisen nach Anspruch 13,
wobei das zweite Zubehörteil (200) weiter eine Körperwand (220) umfasst, die mit der Bodenwand (210) einen zur Aufnahme von Nahrungsmitteln geeigneten Behälter definiert, wobei die Körperwand (220) im Wesentlichen zylindrisch um eine Symmetrieachse ist und wobei sich der Stift (201) von einem Übergang (250) zwischen der Bodenwand (210) und der Körperwand (220) des zweiten Zubehörteils (200) im Wesentlichen parallel zu der Symmetrieachse erstreckt.

15. Elektrisches Haushaltsgerät zur Zubereitung von Speisen nach einem der Ansprüche 11 bis 14,
wobei das zweite Zubehör (200) eine Minihackerschüssel ist.

16. Elektrisches Haushaltsgerät zur Zubereitung von Speisen nach einem der Ansprüche 11 bis 15,
wobei das zweite Zubehörteil (200) weiter eine Körperwand (210) umfasst, in der eine Vertiefung ausgebildet ist, die dafür ausgelegt ist, eine Kontaktfläche (34) der Klappe (30) aufzunehmen, wenn das zweite Zubehörteil (200) auf den zweiten Antriebsausgang (20) aufgesetzt wird.

17. Elektrisches Haushaltsgerät zur Zubereitung von Speisen nach einem der Ansprüche 11 bis 16, das weiter ein erstes Zubehörteil (100) umfasst, das dafür ausgelegt ist, abnehmbar auf den ersten Antriebsausgang (10) aufgesetzt zu werden, um durch den ersten Antriebsausgang (10) in Drehung versetzt zu werden.

18. Elektrisches Haushaltsgerät zur Zubereitung von Speisen nach einem der Ansprüche 11 bis 17,
wobei es sich bei dem Gerät um eine Konditormaschine handelt.

## Claims

1. A base (1) for a domestic electrical appliance for food preparation, comprising : -
- a first drive output (10) designed to be removably installed and to rotate a first accessory (100);
- a second drive output (20) designed to be removably installed and to rotate a second accessory (200);
- an electric motor configured to rotate the first drive output (10) and the second drive output (20) simultaneously; and
- a pivoting safety shutter (30), comprising a hinge (31) mounted on the base (1) so as to allow pivoting of the shutter (30) relative to the base (1), and a closure plate (32) designed to close off the first drive output (10) and the second drive output (20), said shutter (30) being pivotally mounted on the base (1) between a first configuration in which the closure plate (32) of the shutter (30) covers the first drive output (10), the second drive output (20) being uncovered, and a second configuration in which the closure plate (32) of the shutter (30) covers the second drive output (20), the first drive output (10) being uncovered,
the shutter (30) being configured to cooperate with the second accessory (200) so as to ensure that the shutter (30) is positioned and held in the first configuration when the second accessory (200) is positioned on the second drive output (20).

2. The base (1) for a domestic electrical appliance for food preparation according to claim 1, in which the hinge (31) of the shutter (30) is mounted on the base (1) substantially equidistant between the first drive output (10) and the second drive output (20).

3. The base (1) for a domestic electrical appliance for food preparation according to claim 1 or claim 2, in which the shutter (30) comprises an arm (33) connecting the hinge (31) to the closure plate (32).

4. The base (1) for a domestic electrical appliance for food preparation according to claim 3, in which the arm (33) of the shutter (30) is configured to cooperate with a support stop (201) provided on the second accessory (200) so as to ensure that the shutter (30) is positioned and held in the first configuration when the second accessory (200) is positioned on the second drive output (20).

5. The base (1) for a domestic electrical appliance for food preparation as claimed in claim 3 or claim 4, in which the arm (33) of the shutter (30) forms a substantially flat plate extending in the prolongation of the closure plate (32).

6. The base (1) for a domestic electrical appliance for food preparation according to any one of claims 3 to 5, wherein the shutter (30) further comprises a contact face (34) connected to the arm (33) of the shutter (30), the hinge (31) forming a junction between the contact face (34) and the arm (33), wherein when the shutter (30) is in the first configuration or in the second configuration, the contact face (34) extends substantially perpendicular to the arm (33) and to the closure plate (32), and wherein the contact face (34) of the shutter (30) is arranged to be housed in a recess (101) of the first accessory (100) so as to limit pivoting of the shutter (30) when the shutter (30) is in the second configuration and the first accessory (100) is positioned on the first drive output (10), and/or to be housed in a recess of the second accessory (100) so as to limit pivoting of the shutter (30) when the shutter (30) is in the first configuration and the second accessory (200) is positioned on the second drive output (20).

7. The base (1) for a domestic electrical appliance for food preparation according to any one of claims 3 to 6, wherein the shutter (30) comprises an additional arm (33') and an additional hinge (31') intended to be mounted on the base (1) so as to allow pivoting of the shutter (30) relative to the base (1), wherein the additional arm (33') connects the additional hinge (31') to the closure plate (32).

8. The base (1) for a domestic electrical appliance for food preparation according to any one of the preceding claims, in which the shutter (30) is configured to cooperate additionally with a supplementary support stop provided on the first accessory (100) so as to ensure that the shutter (30) is positioned and held in the second configuration when the first accessory (100) is positioned on the first drive output (10).

9. The base (1) for a domestic electrical appliance for food preparation according to any of the preceding claims, wherein the first drive output (10) comprises a first output shaft (11) and a first driver (12) integral in rotation with the first output shaft (11), the second drive output (20) comprises a second output shaft (21) and a second driver (22) integral in rotation with the second output shaft (21), wherein the shutter plate (32) of the shutter (30) is adapted to completely cover the first output shaft (11) and to completely cover the first driver (12) when the shutter (30) is in the first configuration, the shutter plate (32) of the shutter (30) resting on the first driver (12), and wherein the closure plate (32) of the shutter (30) is adapted to completely cover the second output shaft (21) and to completely cover the second driver (22) when the shutter (30) is in the second configuration, the closure plate (32) of the shutter (30) resting on the second driver (22).

10. The base (1) for a domestic electrical appliance for food preparation according to one of the preceding claims, further comprising a reduction gear adapted to reduce a rotational speed of the second drive output (20) relative to a rotational speed of the first drive output (10).

11. A domestic electrical appliance for food preparation, comprising a base (1) according to any one of claims 1 to 10 and a second accessory (200) adapted to be removably fitted to and rotated by the second drive output (20) of the base (1).

12. The domestic electrical appliance for food preparation according to claim 11, in which said second accessory (200) comprises a bottom wall (210) adapted to be disposed facing the base (1) when the second accessory (200) is placed on the second drive output (20), said second accessory (200) comprising a support stop (201) configured to bear against the shutter (30) so as to ensure that the shutter (30) is positioned and held in the first configuration when the second accessory (200) is positioned on the second drive output (20).

13. The domestic electrical appliance for food preparation according to claim 12, **characterized in that** the support stop (201) is formed by a lug of the second accessory (200).

14. The domestic electrical appliance for food preparation according to claim 13, wherein said second accessory (200) further comprises a body wall (220) defining with the bottom wall (210) a reservoir adapted to receive a food item, wherein the body wall (220) is substantially cylindrical about an axis of symmetry, and wherein the lug (201) extends substantially parallel to the axis of symmetry from a junction (250) between the bottom wall (210) and the body wall (220) of the second accessory (200).

15. The domestic electrical appliance for food preparation according to any one of claims 11 to 14, wherein said second accessory (200) (200) is a mini-chopper bowl.

16. The domestic electrical appliance for food preparation according to any one of claims 11 to 15, wherein said second accessory (200) further comprises a body wall (210) in which is formed a recess adapted to accommodate a contact face (34) of the shutter (30) when the second accessory (200) is placed on the second drive output (20).

17. The domestic electrical appliance for food preparation according to any one of claims 11 to 16, further comprising a first accessory (100) adapted to be removably positioned on the first drive output (10) so as to be rotated by the first drive output (10).

18. The domestic electrical appliance for food preparation according to any one of claims 11 to 17, wherein the appliance is a food processor.
